# EUROPEAN PATENT SPECIFICATION

(11) **EP 2 383 530 B1**
(45) Date of publication and mention of the grant of the patent: **27.11.2019**
(21) Application number: 11162925.9
(22) Date of filing: 19.04.2011
(51) Int. Cl.: F25B 9/14

(54) **Optimization of a thermoacoustic apparatus based on operating conditions and selected user input**
Optimierung einer thermoakustischen Vorrichtung basierend auf Betriebsbedingungen und ausgewählter Benutzereingabe
Optimisation d'un appareil thermo-acoustique basé sur les opérations de fonctionnement et saisie d'utilisateur sélectionné

(30) Priority: 30.04.2010 US 771666
(43) Date of publication of application: 02.11.2011
(73) Proprietor: Palo Alto Research Center Incorporated, Palo Alto, California 94304 (US)
(72) Inventor: Schwartz, David Eric, Menlo Park, CA 94025 (US); Garner, Sean, San Francisco, CA 94103 (US)
(74) Representative: Gill Jennings & Every LLP

(56) References cited:
- WO-A2-2008/036920
- JP-A- 2002 061 976
- JP-A- 2002 228 287
- JP-A- 2005 061 707

## Description

The present disclosure is related to thermoacoustic devices, and more specifically to an electrical control system for optimizing the operation of a thermoacoustic device such as a thermoacoustic refrigerator or thermoacoustic heat engine.

The pulse-tube refrigerator typifies travelling-wave thermoacoustic refrigerators. In such devices, an acoustic wave travels through a gas. The pressure and velocity oscillations of the gas are largely in-phase in certain regions of the device. Thus, these devices are generally referred to as traveling-wave devices.

An acoustic source, for example an electromechanical transducer with a moving piston, generates oscillating acoustic energy in a sealed enclosure containing compressed gas. The acoustic energy passes through a first heat exchanger, the "hot" heat exchanger, generally connected, for example via heat exchange fluid, to a heat reservoir at ambient temperature, a regenerative heat exchanger, or "regenerator", and another heat exchanger, the "cold" heat exchanger, which is connected, for example via heat exchange fluid, to the thermal load which is to be cooled by the refrigerator. Usually, the cold heat exchanger is followed by another tube, called a "pulse tube," and a last ambient-temperature heat exchanger, the "ambient" heat exchanger, which serves to isolate the cold heat exchanger and thereby reduce parasitic heat loading of the refrigerator. The "hot" heat exchanger and "ambient" heat exchanger are often at the same temperature. After the "ambient" heat exchanger is an acoustic load, often an orifice in combination with inertances and compliances, which dissipates acoustic energy. Here, a "heat exchanger" is taken to mean a device which exchanges heat between a gas inside the thermoacoustic device and an outside fluid, such as a stream of air.

In steady state, a temperature gradient is established in the regenerator in the direction from the hot to the cold heat exchanger (if taken as a vector the gradient would be in the opposite direction). Heat is ideally transferred nearly isothermally between the gas and the regenerator material, often metal or ceramic porous material or mesh. With traveling-wave acoustic phasing, the gas in the regenerator undergoes an approximate Stirling cycle. In this way, the maximum heat can be moved from the cold to the hot heat exchanger per acoustic energy consumed.

In a looped travelling-wave thermoacoustic refrigerator device of a type known in the art the acoustic load is replaced by an acoustic section that delivers part of the acoustic energy that would otherwise be dissipated in the load to the back face of the electromechanical transducer, thereby reducing the electrical input power required for a given cooling power and therefore increasing the efficiency of the device. In another configuration, "excess" acoustic power is delivered to the back of an electromechanical transducer of a second thermoacoustic refrigerator, whose load is similarly replaced with an acoustic section that delivers its "excess" acoustic power to the back face of the first electromechanical driver in a closed loop. Similarly, three or more thermoacoustic refrigerator units can be connected, output-to-input, in a closed loop. In another device known in the art, the "excess" acoustic power is delivered to the front face of the electromechanical transducer.

Analogously, a traveling-wave thermoacoustic heat engine is a device which converts heat to work. In this device, heat is applied at "hot" heat exchanger, which is maintained at a high temperature. "Cold" heat exchanger and "ambient" heat exchanger are maintained at ambient or cold temperatures. Oscillating acoustic energy in the enclosure is converted to electrical energy by a power transducer, for example, an electromagnetic transducer.

The temperatures in thermoacoustic coolers and heat engines are rarely fixed, but are functions of ambient conditions, heat availability, user settings, and so forth. When operated at a given power and frequency, the efficiencies of thermoacoustic refrigerators vary with the temperatures of the hot, cold, and ambient heat exchangers. Similarly, when operated at a given power and with a given load, the efficiencies of thermoacoustic heat engines vary with the temperatures of the heat exchangers. This effect is particularly significant in the case of a looped refrigerator or engine because such a system is resonant, with the resonant frequency depending in part on the operating temperatures, such as the temperatures of the ambient environment in which the device operates, the temperatures of the several heat exchangers, and so on, which affect the acoustic gain inside the regenerator, and, in the case of the engine, the load. As the temperatures change, the resonant frequency changes and hence the optimal frequency of operation changes. In the case of a pulse-tube refrigerator and like devices, as the temperatures change, the phasing of the acoustic power in the region of the regenerator changes, potentially reducing the effectiveness of heat regeneration and thereby the efficiency of the device. Therefore, there is needed in the art an apparatus and method for controlling aspects of the operation of a thermoacoustic device so as to optimize its efficiency as a function of the conditions of operation, such as temperature, humidity, etc.

An example of thermoacoustic apparatus is described in WO-A-2008/036920 which describes a method of controlling a pulse tube cryocooler in which the power input to the acoustic source is varied to maintain temperature of a refrigeration load or a temperature that is at least referable to the temperature of the refrigeration load, at a set point temperature. Additionally, the impedance of an inertance network of the pulse tube cryocooler is also adjusted to obtain a maximum cooling power to the refrigeration load at the particular temperature as sensed and the particular power that is being supplied to the acoustic source. In accordance with a first aspect of the present invention, a thermoacoustic apparatus is provided according to claim 1.

In accordance with a second aspect of the present invention, a method of operating a thermoacoustic apparatus of a type which includes a body containing an electromechanical driver and a regenerator is provided according to claim 9.

Accordingly, the present disclosure is directed to a system and method for providing electrical control of the frequency and/or input power of a thermoacoustic refrigerator to optimize its efficiency as a function of operating temperatures, the ambient temperatures, humidity, and selected user input. It is also directed to a system and method for providing electrical control of the impedance of the load of a thermoacoustic heat engine to optimize its efficiency as a function of operating temperatures, the ambient temperature, humidity, and selected user input.

A thermoacoustic refrigerator includes a generally hollow, sealed body containing a working gas. Within said body is disposed: a regenerator, a first heat exchanger, a second heat exchanger, and an electromechanical driver. Acoustic energy from the electromechanical driver is directed into the body. Each heat exchanger may be provided with temperature sensors for measuring the temperature proximate the heat exchanger internal to the body and/or external to the body and/or of the heat exchange fluid, if present, during operation of the thermoacoustic apparatus. Additional temperature sensors may be provided for measuring the temperature of the space being cooled. Humidity sensors may also be provided for measuring the relative or absolute humidity in the ambient region to which heat is rejected and/or the space being cooled. A controller receives data from the various sensors, typically measured at a plurality of times, and determines and provides a control signal based on these signals and on user input. The control signal is provided to a variable frequencydriver, which drives the electromechanical driver according to the control signal. In this way, the operation of the thermoacoustic apparatus is controlled, at least in part, as a function of the heat exchanger temperatures, ambient temperature, and ambient humidity. Operation of the thermoacoustic apparatus may then be optimized (e.g., driving power requirement minimized) in use.

Furthermore, acoustic power within the body may be converted to electrical energy, and the state of this conversion may also be factored into the control signal. In addition, transducers measuring the acoustic pressure and gas flow velocity may be disposed inside the body and the outputs of these sensors may be factored into the control signal. In some embodiments, the past state of the system may be incorporated into the control algorithm. For example, whether a certain temperature signal is increasing or decreasing may be factored into the control signal as an additional input.

The controller may, in certain embodiments, be memory containing a look-up table in which independent variables, such as ambient temperature and humidity, as well as user defined operating parameters, such as the cold temperature set point and other operating parameters are matched to frequency and drive current such that the control signal is determined from the look-up table. In other embodiments, dependent variables, such as heat exchanger temperatures, internal pressures, and internal gas flow rates, and/or the past state of any independent or dependent variables may also be referenced in the look-up table to determine the control signal. In yet other embodiments, logic or digital or analog circuitry, or a combination of any of these elements, with or without look-up tables, may be used to determine the operating parameters, including the drive frequency and power. This logic may contain such functionality as switching among several look-up tables with different combinations of input variables depending on the current and past state of the device.

In embodiments with multiple acoustic transducers, the controller may determine an independent drive power and electrical phase for each transducer.

Operation of a thermoacoustic heat engine is essentially as described above, but without the electromechanical driver. Rather, an acoustic energy converter is provided within the body. The impedance of a load connected to the acoustic energy converter controls in part the operating state of the thermoacoustic heat engine. The control signal (determined at least in part from the various operating temperatures) determines the impedance of the load, thereby controlling the efficiency of operation of the thermoacoustic heat engine.

The above is a summary of a number of the unique aspects, features, and advantages of the present disclosure. However, this summary is not exhaustive. Thus, these and other aspects, features, and advantages of the present disclosure will become more apparent from the following detailed description and the appended drawings, when considered in light of the claims provided herein.

In the drawings:
Fig. 1 is a cut-away illustration of a thermoacoustic refrigerator including control circuitry for optimizing efficiency as a function of operating temperatures, ambient temperature and humidity, and selected user input according to a first embodiment of the present disclosure.
Fig. 2 is a cut-away illustration of a thermoacoustic refrigerator including control circuitry for optimizing efficiency as a function of operating temperatures, ambient temperature and humidity, and selected user input according to a second embodiment of the present disclosure.
Fig. 3 is a cut-away illustration of a thermoacoustic refrigerator including control circuitry for optimizing efficiency as a function of operating temperatures, ambient temperature and humidity, and selected user input according to a third embodiment of the present disclosure.
Fig. 4 is a cut-away illustration of a thermoacoustic heat engine including control circuitry for optimizing efficiency as a function of operating temperatures, ambient temperature and humidity, and selected user input according to a first embodiment of the present disclosure.
Fig. 5 is a schematic illustration of a load control circuit of a type that may be deployed in a thermoacoustic heat engine of the type illustrated in Fig. 4.
Fig. 6 is a cut-away illustration of a thermoacoustic heat engine including control circuitry for optimizing efficiency as a function of operating temperatures, ambient temperature and humidity, and selected user input according to a second embodiment of the present disclosure.
Fig. 7 is a schematic illustration of a power combiner circuit of a type that may be deployed in a thermoacoustic heat engine of the type illustrated in Fig. 4.

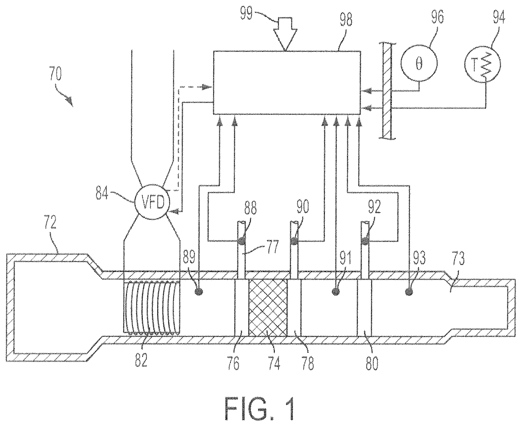

Fig. 1 is a cut-away illustration of a first embodiment of a thermoacoustic refrigerator 70 including control circuitry for optimizing efficiency as a function of operating temperatures, the ambient temperature and humidity, and selected user input. While Fig. 1 and the description associated therewith are focused on a refrigerator, it will be appreciated that the discussions herein apply equally to heat pumps, heat engines and other forms of thermoacoustic devices, particularly as described further herein.

Thermoacoustic refrigerator 70 comprises a generally tubular body 72. The material from which body 72 is constructed may vary depending upon the application of the present invention. However, body 72 (and indeed all bodies described herein) should generally be thermally and acoustically insulative, and capable of withstanding pressurization to at least several atmospheres. Exemplary materials for body 72 include stainless steel or an iron-nickel-chromium alloy.

Disposed within body 72 is regenerator 74. Regenerator 74 (indeed, all regenerators described herein) may be constructed of any of a wide variety of materials and structural arrangements which provide a relatively high thermal mass and high surface area of interaction with the gas but low acoustic attenuation. A wire mesh or screen, open-cell material, random fiber mesh or screen, or other material and arrangement as will be understood by one skilled in the art may be employed. The density of the material comprising regenerator 74 may be constant, or may vary along its longitudinal axis such that the area of interaction between the gas and wall, and the acoustic impedance, across the longitudinal dimension of regenerator 74 may be tailored for optimal efficiency. Details of regenerator design are otherwise known in the art and are therefore not further discussed herein.

Adjacent each lateral end of regenerator 74 are first and second heat exchangers 76, 78, respectively. Heat exchangers 76, 78 (indeed, all heat exchangers described herein) may be constructed of any of a wide variety of materials and structural arrangements which provide a relatively high efficiency of heat transfer from within body 72 to a transfer medium. In one embodiment, heat exchangers 76, 78 may be one or more tubes for carrying therein a fluid to be heated or cooled. Heat exchangers 76, 78 are formed of a material and sized and positioned to efficiently transfer thermal energy (heating or cooling) between the fluid therein and the gas within body 72 during operation of the refrigerator. To enhance heat transfer, the surface area of heat exchangers 76, 78 may be increased with fins or other structures as is well known in the art. Tubes 77, 79 connected to heat exchangers 76, 78, respectively, permit the transfer of fluid from a thermal reservoir or load external to refrigerator 70 to and from heat exchangers 76, 78. Details of heat exchanger design are otherwise known in the art and are therefore not further discussed herein.

Optionally, a third heat exchanger 80 may be disposed within one end of body 72, for example such that heat exchanger 78 is located between third heat exchanger 80 and regenerator 74. Third heat exchanger 80 may be of a similar construction to first and second heat exchangers 76, 78 such as one or more tubes formed of a material and sized and positioned to efficiently transfer thermal energy (heating or cooling) between a fluid therein and the gas within body 72 during operation of the refrigerator. Tube 81 permits the transfer of fluid from a thermal reservoir or load external to refrigerator 70 to and from the third heat exchanger 80.

An electromechanical driver 82 (for example an acoustic wave source) is disposed within body 72, proximate first heat exchanger 76. Many different types of devices may serve the function of electromechanical driver 82, such as well-known moving coil, piezo-electric, electro-static, ribbon or other forms of loudspeaker. A very efficient, frequency tunable, and frequency stable speaker design is preferred so that the cooling efficiency of the refrigerator may be maximized.

A variable frequency driver (VFD) 84 is connected to electromechanical driver 82. VFD 84 is capable of driving electromechanical driver 82 at a desired frequency and amplitude with very high conversion efficiency. An acoustic load 73, such as an orifice, forms a part of body 72 proximate second or third heat exchangers 78, 80, which dissipates acoustic energy.

Initially, a gas, such as helium, is sealed within housing 72. Oscillating electric power from VFD 84 is provided to electromechanical driver 82 which generates acoustic oscillations in the gas. With proper choice of the dimensions and material choices for housing 72 and regenerator 74, and use of an appropriate gas, an approximate Stirling cycle is thus initiated in the region of regenerator 74, establishing a temperature gradient in regenerator 74 such that when the system reaches steady-state, first heat exchanger 76, the "hot" heat exchanger, is at relatively higher temperatures than second heat exchanger 78, the "cold" heat exchanger.

A Stirling cycle comprises a constant-volume cooling of the gas as it moves in the direction from the hot heat exchanger to the cold heat exchanger, rejecting heat to the regenerator, isothermal expansion of the gas, constant-volume heating of the gas as it moves in the direction from the cold heat exchanger to the hot heat exchanger, accepting heat from the regenerator, and consequent isothermal contraction of the gas, at which point the gas is at its initial state and the process repeats itself. In this way heat is moved from the cold to the hot heat exchangers. Regenerator 74 serves to store heat energy and greatly improve the efficiency of energy conversion.

In order to take into account the various system and ambient temperatures in determining the frequency and/or amplitude at which VFD 84 drives electromechanical driver 82, a number of sensors are employed. These can be generally divided into two types; those that sense quantities largely independent of the operating state of the device, such as ambient temperature and humidity, and those that sense quantities that are somewhat or largely dependent on the operating state of the device, such as internal pressure amplitude, gas flow rate, gas temperatures, and heat exchanger temperatures, and the temperature of the space being cooled.

According to the embodiment shown in Fig. 1, these sensors take the form of thermocouples, such as thermocouple 89 for measuring the temperature inside body 72 proximate heat exchanger 76, thermocouple 88 for measuring the temperature of the heat exchange fluid within heat exchanger 76, thermocouple 91 for measuring the temperature inside body 72 proximate heat exchanger 78, thermocouple 90 for measuring the temperature of the heat exchange fluid within heat exchanger 78, thermocouple 93 for measuring the temperature inside body 72 proximate heat exchanger 80, and thermocouple 92 for measuring the temperature of the heat exchange fluid within heat exchanger 80. The use of thermocouples as temperature sensors is only illustrative; any type temperature sensor may be utilized. In addition, an ambient temperature sensor 94 such as a thermocouple, a thermometer, etc. is disposed proximate body 72 for measuring, for example the ambient temperature in the space to which heat is rejected by the refrigerator, in the space proximate an intake of the apparatus, the outside temperature, etc. That is, this space may be physically proximate thermoacoustic refrigerator 70 or physically remote from thermoacoustic refrigerator 70, such as outside of the building being cooled or in an adjacent room (in the case of thermoacoustic refrigerator 70 being a room cooler). Thus, in one embodiment temperature sensor 94 is proximate thermoacoustic refrigerator 70, in another it is for example in the room being cooled but not necessarily proximate thermoacoustic refrigerator 70, and in still another embodiment temperature sensor 94 need not be anywhere near thermoacoustic refrigerator 70. We make the distinction here between the ambient temperature and the temperature inside the space being cooled. The latter is dependent on the operation of the device (i.e., the device is cooling it) while the former isn't. In concept, the operation of thermoacoustic refrigerator 70 can therefore be in part a function of the "outside" temperature, and not just the temperature of the room being cooled.

Furthermore, a hygrometer (humidity sensor) 96 may be disposed proximate body 72 for measuring the ambient humidity in the space to which heat is rejected by the refrigerator. Hygrometer 96, or additional hygrometers may also be located to measure the ambient absolute or relative humidity, as described above with regard to temperature sensor 94. It should be noted that while various thermocouples, a thermometer, and a hygrometer have been disclosed and shown in Fig. 1, many of these elements are optional, and we suggest that the minimum embodiment comprise a single thermometer, thermocouple, or similar sensor 89. That single thermometer, thermocouple, or similar sensor can measure temperature at a region of body 72, outside of the thermoacoustic device and in an area in which said thermoacoustic apparatus operates, at one of the heat exchangers, etc. Furthermore, additional thermocouples, thermometers, humidity sensors, and other sensors such as pressure and flow sensors, etc. may be provided, in various combinations, without departing the spirit and scope of the present disclosure.

Each of thermocouples 86, 88, 90, and 92, thermometer 94, and hygrometer 96 (as well as other sensor devices) are connected to provide data signals to a controller 98. Controller 98 uses the various temperature, humidity, and other measurements to generate a control signal for controlling VFD 84, which controls (varies) the frequency and input power, current, and/or voltage of the electromechanical driver 82 to optimize efficiency or cooling power. Controller 98 may sample the various variables periodically during operation of thermoacoustic refrigerator 70 and may provide periodic updated control signals to VFD 84 to account for changes in operating and ambient conditions and thereby maintain an optimal or selected efficiency. Thus, controller 98 can generate control signals at least in part from a plurality of temperature data signals, the signal taken at various times during operation of the thermoacoustic refrigerator 70, such that operation of the electromechanical driver 82 based on the control signals provides optimized operational efficiency for said thermoacoustic refrigerator 70. Alternatively, other mechanisms may be provided such that the temperatures from thermocouples 86, 88, 90, and 92, thermometer 94, and hygrometer 96 (as well as other sensor devices) are provided to controller 98 at intervals during operation of thermoacoustic refrigerator 70.

An additional input to controller 98 may be adjustable user parameters 99. Such user input parameters may include desired cooling power, maximum power consumption, desired cooling temperature, and so on for thermoacoustic refrigerator 70.

According to one embodiment, controller 98 comprises logic that is programmed to vary the frequency and/or power of electromechanical transducer 82 according to a lookup table containing a mapping from ambient temperature to frequency and power. For example, the power can be left fixed and the frequency can be made to increase as the ambient temperature increases. In one specific example that has been modeled, when the temperature at cold heat exchanger 78 (as measured by thermocouple 90) is 299.8 K and the temperatures of hot and ambient heat exchangers 76, 80 (as measured by thermocouples 88, 92, respectively) are both 308.2 K, the optimal frequency for 12.9 watts of input power was found to be 60 Hz. However, when the temperatures at hot and ambient heat exchangers 76, 80 increase to 318.2 K, the optimal frequency for 12.9 watts of input power increases to 61.2 Hz. Maintaining power requires increasing the input current from VFD 84 from 1.14 amps to 1.18 amps. Elements of a lookup table corresponding to this map are shown in table 1.

**Table 1**

| T at "hot" exchanger (K) | T at "cold" exchanger (K) | T at "ambient" exchanger (K) | ··· (additional parameters) | Drive current (amps) | Drive frequency (Hz) |
|---|---|---|---|---|---|
| ····· | | | | | |
| 308.2 | 299.8 | 308.2 | ··· | 1.14 | 60 |
| 318.2 | 299.8 | 318.2 | ··· | 1.18 | 61.2 |
| ····· | | | | | |

In one embodiment, the controller can be implemented with an embedded microprocessor and analog-to-digital and digital-to-analog converters. In another embodiment a fully analog solution consisting of a VFD and combinations of transistor amplifiers and other electronic components can be used. In yet another embodiment, a combination of analog and digital logic can be used. As is well known to those skilled in the art of control system design, feedback control systems, i.e., control systems using input variables dependent on the operating state of the device, and control systems with memory of the past state of the system, may achieve steady state operation only under certain conditions. Under other conditions, they may oscillate among different states, or fail to "capture" or "lock" into the desired state. Accordingly, in embodiments in which the controller of the system described herein uses dependent or historical variables as inputs, logic and control more involved than a look-up table may be required to assure steady state operation. For example, if the initial state of the system is beyond the capture range of the device, the control system may be designed to switch from utilizing solely independent variables to a combination of independent and dependent variables as the system nears its user-defined set point.

As a further example, some variables, such as pressure amplitude, respond relatively quickly to changing of operating parameters, while others, such as the temperature of the space being cooled, respond to changing operating parameters with a relatively long time lag. To prevent oscillations, the controller should respond to changes in the temperature of the space being cooled more slowly than to the changes in the pressure amplitude.

As a yet further example, consider a device with the look-up table in Table 1. This look-up table may not have entries for every combination of heat exchanger temperatures. In such a case, the controller might have logic which would turn the refrigerator on at a certain default frequency and power until the temperatures reached a set in the look-up table, at which time the device would be set to be "locked" and the controller would begin to use the look-up table to define the operating parameters.

In general, the techniques for designing such controllers are well-known to those skilled in the art of feedback control system design.

The optimal frequencies and powers will differ from thermoacoustic device to thermoacoustic device. They will also differ depending on user preferences, such as cooling power. In one embodiment, controller 98 is designed for a specific thermoacoustic device (e.g., specific dimensions, materials, etc.) In another embodiment, controller 98 is configurable for use with multiple devices. For example, the lookup table can be stored in rewritable memory such as flash memory, and reprogrammed for each device. The lookup table need not be fixed for a given unit, but can be changed if the unit is moved to a different room, different conditions, etc. In various other embodiment, controllers can be interchangeable among devices of the same type (e.g., same cooling power), the controllers can be interchangeable among devices of different types (e.g., a 1 kW unit and a 10 kW unit), and/or an existing device can be retrofitted with sensors and a controller.

In another embodiment, controller 98 uses a feedback loop to optimize the efficiency and or power. Some sensed parameters, such as the outside temperature and humidity and the user settings, including the temperature set point, are independent of the controller output. Others, such as the internal temperatures of heat exchangers 76, 78, 80, the internal pressures, and the flow velocity, will vary as the frequency and power of VFD 84 are changed. Thus, in a feedback embodiment, additional sensors such as pressure and flow velocity sensors (not shown) located within body 72, and a measure of the state of VFD 84 (shown by the dashed line connecting VFD 84 and controller 98) are employed. A "feedback" system utilizes these latter values. A "feedforward" system only utilizes the former.

The feedforward system will be universally stable while the feedback system may not. Accordingly, the control system with feedback may imply a more complex process. For example, in one embodiment the system starts up using only feedforward-type (i.e., independent) inputs. Once the system reaches steady-state, the system then implements the feedback system.

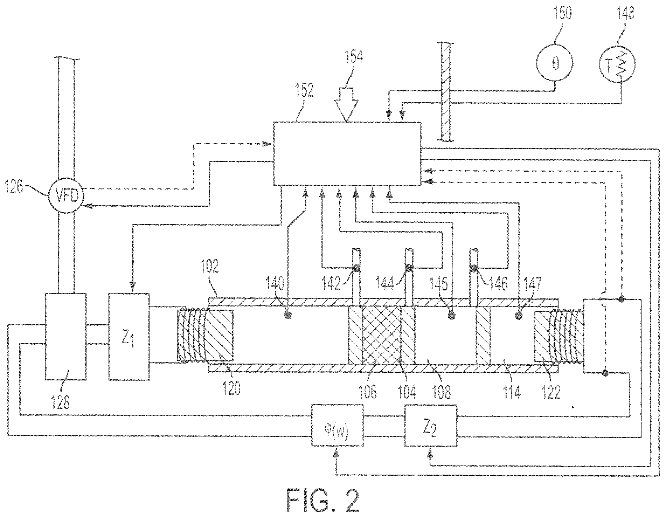

Fig. 2 is a cut-away illustration of a second embodiment of a thermoacoustic refrigerator 100 including control circuitry for optimizing efficiency as a function of operating temperatures, the ambient temperature and humidity, and selected user input. Thermoacoustic refrigerator 100 comprises a generally tubular body 102. Disposed within body 102 is regenerator 104.

Adjacent each lateral end of regenerator 104 are first and second heat exchangers 106, 108, respectively. Heat exchangers 106, 108 may be constructed of any of a wide variety of materials and structural arrangements which provide a relatively high efficiency of heat transfer from within body 102 to a transfer medium. In one embodiment, heat exchangers 106, 108 may be one or more tubes for carrying therein a fluid to be heated or cooled. Heat exchangers 106, 108 are formed of a material and sized and positioned to efficiently transfer thermal energy (heating or cooling) between the fluid therein and the gas within body 102 during operation of the refrigerator. To enhance heat transfer, the surface area of heat exchangers 106, 108 may be increased with fins or other structures as is well known in the art. Tubes 110, 112 permit the transfer of fluid from a thermal reservoir or load external to refrigerator 100 to and from heat exchangers 106, 108.

Optionally, a third heat exchanger 114 may be disposed within one end of body 102, for example such that heat exchanger 108 is located between third heat exchanger 114 and regenerator 104. Third heat exchanger 114 may be of a similar construction to first and second heat exchangers 106, 108 such as one or more tubes formed of a material and sized and positioned to efficiently transfer thermal energy (heating or cooling) between a fluid therein and the gas within body 102 during operation of the refrigerator. Tube 116 permits the transfer of fluid from a thermal reservoir or load external to refrigerator 100 to and from the third heat exchanger 114.

An electromechanical driver 120 (for example an acoustic wave source) is disposed at a first longitudinal end of body 102, and an acoustic converter 122 is disposed at a second longitudinal end of body 102 opposite said electromechanical driver 120 relative to said regenerator 104. Many different types of devices may serve the function of electromechanical driver 120, such as well-known moving coil, piezo-electric, electro-static, ribbon or other forms of loudspeaker. A very efficient, compact, frequency tunable, and frequency stable speaker design is preferred so that the cooling efficiency of the refrigerator may be maximized.

Likewise, many different types of devices may serve the function of acoustic converter 122. A well-known electrostatic, electromagnetic, piezo-electric or other form of microphone or pressure transducer may form acoustic converter 122. In addition, gas-spring, compliance elements, inertance elements, or other acoustic elements, may also be employed to enhance the function of converter 122. Again, efficiency is a preferred attribute of acoustic converter 122 so that the cooling efficiency of the refrigerator may be maximized.

A variable frequency driver (VFD) 126 is connected as an input to a combiner 128 (of a type known in the art). VFD 126 is capable of driving electromechanical driver 120 at a desired frequency and amplitude with very high conversion efficiency. Outputs of combiner 128 form inputs to impedance circuit Z₁. The outputs of impedance circuit Z₁ form the inputs to acoustic source 120. Outputs of a second impedance circuit Z₂ are connected as inputs to combiner 128. Outputs from acoustic converter 122 are provided as inputs to the impedance circuit Z₂. The role of impedance circuits Z₁, Z₂, are to match the system impedances so as to drive electromechanical driver 120 efficiently at a desired frequency and phase. A phase delay circuit φ(ω) may also be employed to achieve the desired phasing as is well understood in the art.

In operation, oscillating electric power from VFD 126 is provided to electromechanical driver 120, which generates acoustic oscillations in a gas, such as helium, sealed within housing 102. With proper choice of the dimensions and material choices for housing 102 and regenerator 104, and use of an appropriate gas, an approximate Stirling cycle is thus initiated in the region of regenerator 104, establishing a temperature gradient in regenerator 104 such that when the system reaches steady-state, first heat exchanger 106, the "hot" heat exchanger, is at relatively higher temperatures than second heat exchanger 108, the "cold" heat exchanger. Regenerator 104 serves to store heat energy and greatly improve the efficiency of energy conversion.

In order to take into account the various system and ambient temperatures in determining the frequency and/or amplitude at which VFD 126 drives electromechanical driver 120, a number of sensing devices are employed (again, for sensing quantities largely independent of the operating state of the device, such as ambient temperature and humidity, and those that sense quantities that are somewhat or largely dependent on the operating state of the device, such as internal pressure amplitude and gas flow rate and heat exchanger temperatures, and the temperature of the space being cooled). In the embodiment of Fig. 2, the sensors are thermocouples, such as thermocouple 140 for measuring the temperature inside body 102 proximate first heat exchanger 106, thermocouple 142 for measuring the temperature of the heat exchange fluid within heat exchanger 106, thermocouple 144 for measuring the temperature of the heat exchange fluid within heat exchanger 108, thermocouple 145 for measuring the temperature inside body 102 proximate second heat exchanger 108, thermocouple 146 for measuring the temperature of the heat exchange fluid within heat exchanger 114, and thermocouple 147 for measuring the temperature inside body 102 proximate third heat exchanger 114. Again, the use of thermocouples for as temperature sensors is only illustrative; any type temperature sensor may be utilized.

A temperature sensor 148 such as a thermometer or thermocouple is disposed for measuring the ambient temperature in the space to which heat is rejected by the refrigerator. Furthermore, a hygrometer (humidity sensor) 150 may be disposed for measuring the ambient humidity in the space to which heat is rejected by the refrigerator. It should be noted that while various thermocouples, a thermometer, and a hygrometer have been disclosed and shown in Fig. 1, many of these elements are optional, and the minimum embodiment comprises a single thermocouple, thermometer or other sensor. Furthermore, additional thermocouples, thermometers, and other temperature-related sensors such as internal pressure sensors, etc. may be provided, in various combinations, without departing the spirit and scope of the present disclosure.

Each of thermocouples 104, 142, 144, and 146, thermometer 148, and hygrometer 150 (as well as other sensor devices) are connected to provide data to a controller 152. Controller 152 uses the various temperature, humidity, and other measurements to generate a control signal for controlling VFD 126, which controls (varies) the frequency and input power, current, and/or voltage of the electromechanical driver 120 to optimize efficiency or cooling power. Controller 152 may also control the phase (φ_{(w)}) and impedances (z₁ and z₂)

An additional input to controller 152 may be adjustable user parameters 154. Such user input parameters may include desired cooling power, maximum power consumption, desired cooling temperature, and so on for thermoacoustic refrigerator 100.

According to one embodiment, controller 152 comprises logic that is programmed to vary the frequency and/or power of electromechanical transducer 120 according to a lookup table containing a mapping from ambient temperature to frequency and power. For example, the power can be left fixed and the frequency can be made to increase as the ambient temperature increases. In one embodiment, the lookup table can be implemented with an embedded microprocessor and analog-to-digital and digital-to-analog converters. In another embodiment a fully analog solution consisting of a VFD and combinations of transistor amplifiers and other electronic components can be used. In yet another embodiment, a combination of analog and digital logic can be used.

The optimal frequencies and powers will differ from thermoacoustic device to thermoacoustic device. They will also differ depending on user preferences, such as cooling power. Thus, a user may be provided with control over various inputs 154 to controller 152, for example via a software interface (not shown).

In a feedback embodiment, additional sensors such as pressure and flow velocity sensors (not shown) located within body 102, a measure of the state of VFD 126, and/or a measure of the output of converter 122 are employed.

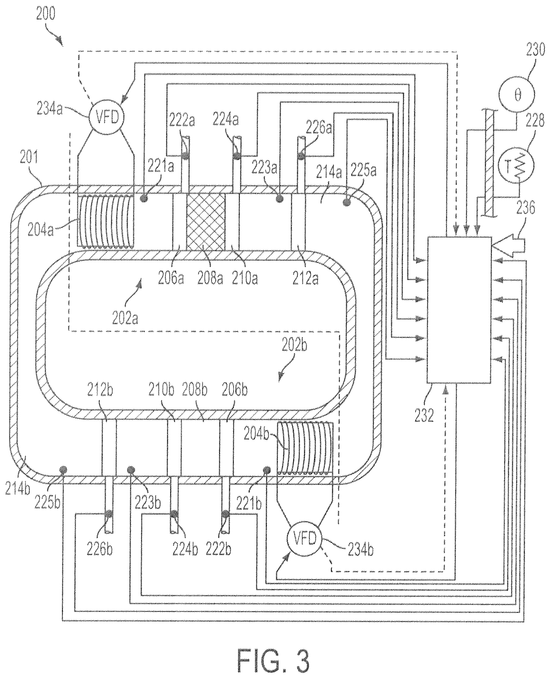

It will be appreciated that the arrangement described above can be extended to other configurations of thermoacoustic refrigerators. Fig. 3 illustrates one example of such an alternative. Thermoacoustic refrigerator 200 illustrated in Fig. 3 is a closed loop apparatus with series-connected cooling stages. Briefly, such a system comprises two or more cooling stages 202a, 202b each including an electromechanical driver 204a, 204b, first heat exchanger 206a, 206b, regenerator 208a, 208b, second heat exchanger 210a, 210b, and optional third heat exchanger 212a, 212b, essentially arranged as described above. Each stage 202a, 202b further comprises an acoustic transmission line 214a, 214b (which in one embodiment are channels through which an acoustic wave may travel), connected to the back side of the electromechanical driver of the next state in series.

According to the embodiment shown in Fig. 3, thermocouples 222a, 224a, and 226a are provided for measuring the temperatures of the heat exchange fluid within heat exchangers 206a, 210a, and 212a, respectively. Thermocouples 221a, 223a, and 225a are provided for measuring the temperatures proximate heat exchangers 206a, 210a, and 212a, respectively. Similarly, thermocouples 222b, 224b, and 226b are provided for measuring the temperatures of the heat exchange fluid within heat exchangers 206b, 210b, and 212b, respectively. And, thermocouples 221b, 223b, and 225b are provided for measuring the temperatures proximate heat exchangers 206b, 210b, and 212b, respectively.

In addition, a thermometer 228 is disposed for measuring the ambient temperature in the space to which heat is rejected by the refrigerator. Furthermore, a hygrometer (humidity sensor) 230 may be disposed for measuring the ambient humidity in the space to which heat is rejected by the refrigerator. Once again, temperature and humidity checks at various locations have been suggested here, but many are optional, and many different combinations and additional measures are possible and contemplated herein.

Each of the thermocouples, thermometer 228, and hygrometer 230 (as well as other sensor devices) provide data to a controller 232. Controller 232 uses the various temperature, humidity, and other measurements to generate a control signal for controlling VFDs 234a, 234b, which control (vary) the frequencies, relative phases, and input power, current, and/or voltage provided to electromechanical drivers 204a, 204b, and/or relative phases of the current and/or voltage of the drivers, to optimize efficiency or cooling power. It should be noted that controller 232 is capable of independently controlling VFDs 234a, 234b, thereby compensating for differences in the material, dimensions, locations, and other variables between stages 202a, 202b.

An additional input to controller 232 may be adjustable user parameters 236. Such user input parameters may include desired cooling power, maximum power consumption, desired cooling temperature, and so on for thermoacoustic refrigerator 200.

As described above, in one embodiment controller 232 comprises logic that is programmed (and optionally, reprogrammable) to vary the frequency and/or power and/or current phase of electromechanical transducers 204a, 204b according to a lookup table containing a mapping from temperatures to frequency, power, and phase for each stage. In another embodiment a fully analog solution consisting of a VFD and combinations of transistor amplifiers and other electronic components for each stage 202a, 202b can be used. In yet another embodiment, a combination of analog and digital logic can be used.

Additional, optional inputs to controller 232 are feedback from VFDs 234a, 234b, and data from additional sensors such as pressure and flow velocity sensors (not shown) located within body 201. The feedback loop may be used to further optimize the efficiency and or power use of thermoacoustic refrigerator 200 and provide operational stability as previously discussed.

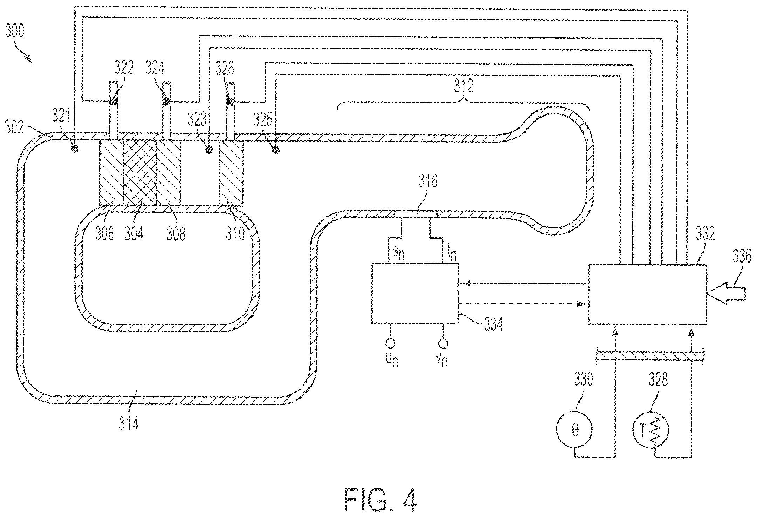

While the description above has been in terms optimization control for a thermoacoustic refrigerator, the general principles disclosed herein may equally be applied to thermoacoustic heat engines. Fig. 4 is a cross-sectional representation of one embodiment of thermoacoustic heat engine 300 incorporating these general principles. Many elements of thermoacoustic heat engine 300 are well known, but briefly, it comprises a hollow, looped, sealed body structure 302 having a regenerator 304 located therein. The regenerator is proximate first heat exchanger 306, generally a "cold" exchanger, at a first end thereof and a second heat exchanger 308, generally a "hot" exchanger, at the opposite end thereof. A third heat exchanger 310, generally at ambient temperature, may optionally be present. A resonator 312, in the form of an extension of the hollow body structure 302, is provided. Body structure 302 is filled with a pressurized gas. A temperature differential is induced across regenerator 304, i.e., between cold heat exchanger 306 and hot heat exchanger 308, subjecting the gas to localized heat transfer. Acoustic energy in the form of a pressure wave in the region of the regenerator subjects the gas to local periodic compression and expansion. Under favorable acoustic conditions, the gas effectively undergoes an approximate Stirling cycle in regenerator 304.

It is desirable to have a large acoustic impedance at regenerator 304 to reduce fluidic resistance losses. Therefore, one family of known thermoacoustic heat engines use an acoustic resonator and/or an acoustic feedback network 314 to achieve this large impedance. However, such a network is not adjustable in use, and does not take into account operating conditions of the heat engine in order to optimize operation.

Accordingly, the embodiment illustrated in Fig. 4 provided with a variable acoustic impedance, such as an electromechanical transducer 316, which may provide impedance tuning (load) in order to optimize efficiency and operation of thermoacoustic heat engine 300, for example, by modifying the resonant frequency of the device. Essentially, a controllable portion of the energy of the pressure wave within body 302 may be converted to electrical energy by electromechanical transducer 316, depending on various system and ambient temperatures and operating conditions.

In order to take into account the various system and ambient temperatures in determining the operation of electromechanical transducer 316 for frequency and impedance tuning, a number of temperature sensors are employed. According to the embodiment shown in Fig. 4, these sensors take the form of thermocouples, such as thermocouples 322, 324, and 326 for measuring the temperature of the heat exchange fluid within heat exchangers 306, 308, and 310, respectively. Additionally, thermocouples 321, 323, and 325 are provided for measuring the temperatures within body 302 proximate heat exchangers 306, 308, and 310, respectively.

In addition, a thermometer 328 is disposed proximate body 302 for measuring the ambient temperature in the space to which heat is rejected by the heat engine. Furthermore, a hygrometer (humidity sensor) 330 may be disposed proximate body 302 for measuring the ambient humidity in the space to which heat is rejected by the heat engine. Once again, temperature and humidity checks at various locations have been suggested here, but many are optional, and many different combinations and additions are possible and contemplated herein.

Each of thermocouples, thermometer 328, and hygrometer 330 (as well as other sensor devices) are connect to provide data to a controller 332. Controller 232 uses the various temperature, humidity, and other measurements to generate a control signal for controlling a load control circuit 324, described in further detail below, which is connected to electromechanical transducer 316. Load control circuit 324 controls (varies) the load presented by electromechanical transducer 316 and hence tunes the impedance within thermoacoustic heat engine 300 to optimize efficiency of heating.

An additional input to controller 332 may be adjustable user parameters 336. Such user input parameters may include desired heating, efficiency factor, and so on for thermoacoustic heat engine 300.

As described above, in one embodiment controller 332 comprises logic that is programmed (and optionally, reprogrammable) to control load control circuit 334 according to a lookup table containing a mapping from temperatures to load. In another embodiment an analog solution consisting of load control circuit 334 and a combination of transistor amplifiers and other electronic components can be used. In yet another embodiment, a combination of analog and digital logic can be used.

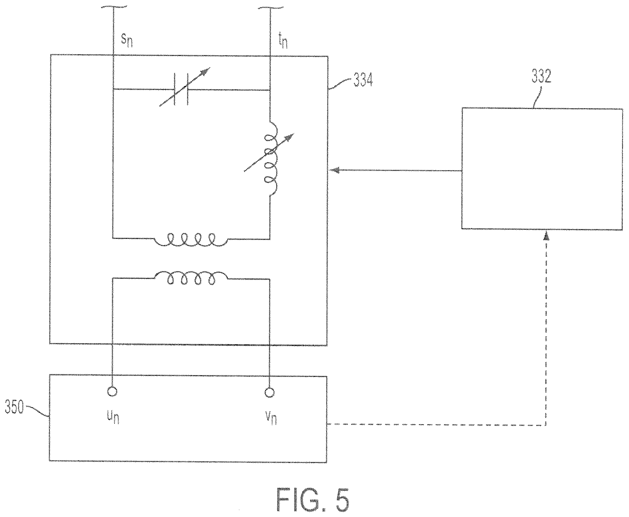

Fig. 5 illustrates one example of a load control circuit 334 of a type that may be employed in the thermoacoustic heat engine 300 of Fig. 4. In the embodiment shown in Fig. 5, a form of variable tap transformer circuit, under control of controller 332, is shown. Many other circuit devices, such as varactor circuits and the like, may also be employed without departing from the spirit and scope of the present disclosure. Electromechanical transducer 316 is connected at sₙ, tₙ, to load control circuit 334. At least a portion of the power attenuated by electromechanical transducer 316 is available for use at the output of load control circuit 334 at uₙ, vₙ, and a system 350 to which uₙ, vₙ are connected will in part dictate the impedance of electromechanical transducer 316. Thus, in one embodiment a feedback signal is provided from system 350 back to controller 332 in order that controller 332 may provide an optimized control signal to load control circuit 334.

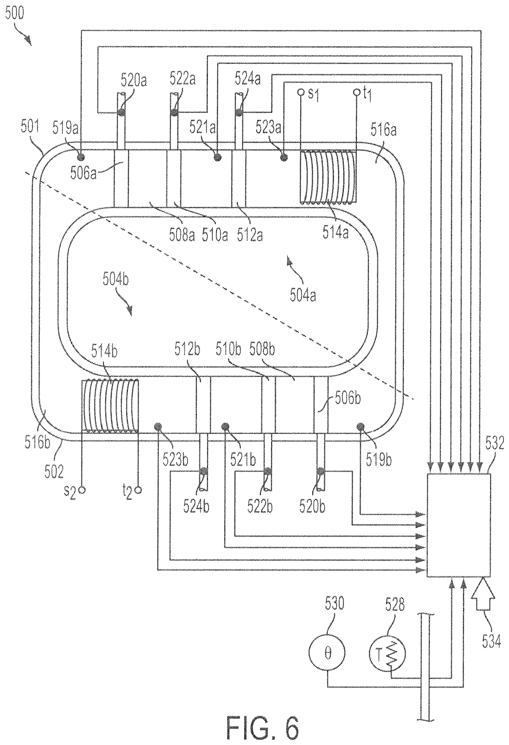

It will be appreciated that the arrangement described above can be extended to other configurations of thermoacoustic heat engines. Fig. 6 illustrates one example of such an alternative, in this case a two-stage looped heat engine 500. Briefly, such a system comprises a housing 502, divided roughly into two heating stages 504a, 504b (although more than two stages is within the scope of this disclosure). Disposed in each stage 504a, 504b are first heat exchangers 506a, 506b, regenerators 508a, 508b, second heat exchangers 510a, 510b, and optional third heat exchangers 512a, 512b, positioned and operated consistent with the description above. Also disposed within each stage are electromechanical transducers 514a, 514b. Each stage 504a, 504b further comprises an acoustic transmission line 516a, 516b (which in one embodiment are each a channel through which an acoustic wave may travel), connected to the back side of the electromechanical transducer of the next state in series.

According to the embodiment shown in Fig. 6, thermocouples 520a, 520b for measuring the temperature of the heat exchange fluid within heat exchangers 506a, 506b, respectively; thermocouples 522a, 522b for measuring the temperature of the heat exchange fluid within heat exchangers 510a, 510b, respectively; and optionally, thermocouples 524a, 524b for measuring the temperature of the heat exchange fluid within heat exchangers 512a, 512b, respectively. Furthermore, thermocouples 519a, 521a, and 523a are provided for measuring the temperature inside body 501 proximate heat exchangers 506a, 510a, and 512a, respectively. Still further, thermocouples 519b, 521b, and 523b are provided for measuring the temperature inside body 501 proximate heat exchangers 506b, 510b, and 512b, respectively.

Thermometer 528 is disposed proximate thermoacoustic refrigerator 500 for measuring the ambient temperature in the space to which heat is rejected by the heat engine. Furthermore, a hygrometer (humidity sensor) 530 may be disposed proximate thermoacoustic refrigerator 500 for measuring the ambient humidity in the space to which heat is rejected by the heat engine. Once again, temperature and humidity checks at various locations have been suggested here, but many are optional, and many different combinations are possible and contemplated herein. We suggest that the minimum embodiment may comprise thermocouples 518a, 518b. Additional thermocouples, thermometers, and other temperature-related sensors such as pressure sensors, etc. may be provided, in various combinations, without departing the spirit and scope of the present disclosure.

Each of the thermocouples, thermometer 528, and hygrometer 530 (as well as other sensor devices) are connect to provide data to a controller 532. Controller 532 uses the various temperature, humidity, and other measurements to generate a control signal for controlling load control circuits (not shown) connected to taps s, t of electromechanical transducers 514a, 514b, respectively. It should be noted that controller 532 is capable of independently controlling each load control circuit for independent load adjustment of electromechanical transducers 514a, 514b, thereby compensating for differences in the material, dimensions, locations, and other variables between stages 504a, 504b.

An additional input to controller 532 may be adjustable user parameters 534. Such user input parameters may include desired heat consumption, output power, and so on for thermoacoustic heat engine 500.

As described above, in one embodiment controller 532 comprises logic that is programmed (and optionally, reprogrammable) to control load control circuits for electromechanical transducers 514a, 514b according to a lookup table containing a mapping from temperatures to load for each stage. In another embodiment an analog solution consisting of load control circuits and a combination of transistor amplifiers and other electronic components can be used. In yet another embodiment, a combination of analog and digital logic can be used.

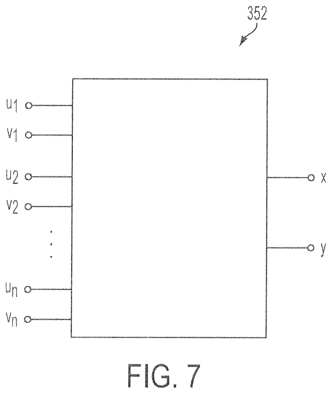

Again, at least some power attenuated by electromechanical transducers 514a, 514b may be used to perform useful work. In the case of an n-stage thermoacoustic heat engine, there may be as many as n electromechanical transducers providing this power. The outputs from these electromechanical transducers may be combined in a combiner circuit 352 shown in Fig. 7 to provide a single output pair x, y for connection to a system (not shown) for performing work. Also as previously discussed, the system to which x and y are connected will in part dictate the frequency and impedance of electromechanical transducers in the n-stage heat engine. Thus, in one embodiment a feedback signal is provided from that system back to a controller (such as controller 532 of Fig. 6) in order that an optimized control signal may be provided to the various load control circuits (such as load control circuit 334 of Fig. 5).

While a plurality of preferred exemplary embodiments have been presented in the foregoing detailed description, it should be understood that a vast number of variations exist, and these preferred exemplary embodiments are merely representative examples, and are not intended to limit the scope, applicability or configuration of the disclosure in any way. For example, while thermocouples have been described as devices employed for measuring the temperatures of various parts of the thermoacoustic apparatus during use, other temperature sensors such as thermistors, thermal/infrared imaging sensors, etc. may similarly be employed. In addition to alternatives, various of the above-disclosed and other features and functions, or alternative thereof, may be desirably combined into many other different systems or applications.

## Claims

1. A thermoacoustic apparatus, comprising:
a generally hollow, sealed body (72) containing a working gas;
a regenerator (74) disposed within said body (72);
a first heat exchanger (76) disposed within said body (72) and proximate said regenerator (74) at a first longitudinal end thereof;
a second heat exchanger (78) disposed within said body (72) and proximate said regenerator (74) at a second longitudinal end thereof;
an electromechanical driver (82) disposed within said body (72) proximate said first heat exchanger (76) such that acoustic energy from said electromechanical driver is directed into said body;
a temperature sensor (94) for measuring a local temperature of said thermoacoustic apparatus and providing a temperature data signal;
a controller (98), communicatively connected to said temperature sensor for determining and providing a control signal based on said temperature data signal; and
a variable frequency driver (84) communicatively coupled to said electromechanical driver (82) and said controller (98), for receiving a control signal from said controller, and at least in part as a function of said control signal providing a variable drive signal to said electromechanical driver (82);
**characterized in that** said temperature sensor (94) is disposed proximate the body (72) and adapted to measure temperature outside of said thermoacoustic apparatus in a space to which heat is rejected by the thermoacoustic apparatus, and to provide an ambient temperature data signal corresponding to said temperature.

2. The thermoacoustic apparatus of claim 1, wherein:
said controller (98) generates said control signal at least in part from a plurality of said ambient temperature data signals, each of said plurality of ambient temperature data signals taken at various times during operation of the thermoacoustic apparatus, such that operation of said electromechanical driver thereby provides a selected optimized efficiency of operation for said thermoacoustic apparatus.

3. The thermoacoustic apparatus of claim 2, further comprising a body temperature sensor (89,91,93) for measuring temperature within said body proximate at least one of said first or second heat exchangers and providing a body temperature data signal, and wherein said controller (98) generates said control signal at least in part from a plurality of said ambient temperature data signals and said body temperature data signals, each of said plurality of ambient and body temperature data signals taken at various times during operation of the thermoacoustic apparatus, such that operation of said electromechanical driver thereby provides a selected optimized efficiency of operation for said thermoacoustic apparatus.

4. The thermoacoustic apparatus of claim 3, further comprising:
a first heat exchanger temperature sensor (88) for measuring the temperature of a fluid disposed within said first heat exchanger (76) during operation of said thermoacoustic apparatus and providing a first heat exchanger temperature data signal; and
a second heat exchanger temperature sensor (90) for measuring the temperature of a fluid disposed within said second heat exchanger (78) during operation of said thermoacoustic apparatus and providing a second heat exchanger temperature data signal;
said controller (98) further communicatively connected to said first heat exchanger temperature sensor (88) and said second heat exchanger temperature sensor (90), and wherein said control signal is further determined based on said first and second heat exchanger temperature data signals.

5. The thermoacoustic apparatus of claim 4, wherein said controller (98) is configured to receive user data, and wherein said control signal is further determined based on said user data.

6. The thermoacoustic apparatus of claim 5, wherein said controller (98) comprises memory, preferably reprogrammable, containing a look-up table in which body temperatures, ambient temperatures, and user data are matched to frequency and drive current, and wherein at a point in time during operation of said thermoacoustic apparatus said control signal includes frequency and drive current values from said table based on corresponding body temperature, ambient temperature, and user data at that point in time.

7. The thermoacoustic apparatus of any of claims 3 to 6, further comprising one or more of:
(i) a hygrometer (96) for measuring the relative humidity in the ambient region of said body during operation of said thermoacoustic apparatus and for providing a humidity data signal; said controller (98) further communicatively connected to said hygrometer, and wherein said control signal is further determined based on said humidity data signal;
(ii) a pressure sensor for measuring the relative pressure in a region within said body during operation of said thermoacoustic apparatus and for providing a pressure data signal; said controller further communicatively connected to said pressure sensor, and wherein said control signal is further determined based on said pressure data signal, and
(iii) a gas flow sensor for measuring the gas flow in a region within said body during operation of said thermoacoustic apparatus and for providing a gas flow data signal; said controller further communicatively connected to said gas flow sensor, and wherein said control signal is further determined based on said gas flow data signal.

8. The thermoacoustic apparatus of any of the preceding claims, further comprising:
an acoustic energy converter disposed within said body (72) opposite said electromechanical driver relative to said regenerator (74) such that at least a portion of acoustic energy within said body is directed to said converter and converted thereby into electrical energy;
said converter communicatively coupled to said controller, and wherein said control signal is further determined based on data from said acoustic energy converter in a feed-back loop.

9. A method of operating a thermoacoustic apparatus of a type which includes a body (72) containing an electromechanical driver (82) and a regenerator (74), comprising:
determining temperature data during operation of said thermoacoustic apparatus, and providing said temperature data to a controller (98);
generating, at said controller (98), a control signal based on at least said temperature data, and providing said control signal to a variable frequency driver (84); and
operating said variable frequency driver (84) so as to control the frequency and amplitude of said electromechanical driver based on said control signal such that operation of said electromechanical driver thereby provides a selected optimized efficiency of operation for said thermoacoustic apparatus;
**characterized in that** said step of determining temperature data comprises measuring temperature outside of said thermoacoustic apparatus in a space to which heat is rejected by the thermoacoustic apparatus so as to provide an ambient temperature data signal corresponding to said temperature.

## Patentansprüche

1. Thermoakustische Vorrichtung, umfassend:
einen allgemein hohlen, abgedichteten Körper (72), der ein Arbeitsgas enthält;
einen Regenerator (74), der innerhalb des Körpers (72) angeordnet ist;
einen ersten Wärmetauscher (76), der innerhalb des Körpers (72) und in der Nähe des Regenerators (74) an einem ersten Längsende davon angeordnet ist;
einen zweiten Wärmetauscher (78), der innerhalb des Körpers (72) angeordnet ist und sich in der Nähe des Regenerators (74) an einem zweiten Längsende davon befindet;
einen elektromechanischen Treiber (82), der innerhalb des Körpers (72) in der Nähe des ersten Wärmetauschers (76) angeordnet ist, so dass akustische Energie von dem elektromechanischen Treiber in den Körper geleitet wird;
einen Temperatursensor (94) zum Messen einer lokalen Temperatur der thermoakustischen Vorrichtung und zum Bereitstellen eines Temperaturdatensignals;
eine Steuereinheit (98), die kommunikativ mit dem Temperatursensor verbunden ist, um ein Steuersignal basierend auf dem Temperaturdatensignal zu bestimmen und bereitzustellen; und
einen Treiber (84) mit variabler Frequenz, der kommunikativ mit dem elektromechanischen Treiber (82) und der Steuereinheit (98) gekoppelt ist, um ein Steuersignal von der Steuereinheit zu empfangen, und wenigstens teilweise als Funktion des Steuersignals ein variables Steuersignal für den elektromechanischen Treiber (82) bereitzustellen;
**dadurch gekennzeichnet, dass** der Temperatursensor (94) in der Nähe des Körpers (72) angeordnet und dazu eingerichtet ist, die Temperatur außerhalb der thermoakustischen Vorrichtung in einem Raum zu messen, in den Wärme von der thermoakustischen Vorrichtung abgeleitet wird, und ein Umgebungstemperaturdatensignal bereitzustellen, das der Temperatur entspricht.

2. Thermoakustische Vorrichtung nach Anspruch 1, bei der:
die Steuereinheit (98) das Steuersignal wenigstens teilweise aus einer Vielzahl von Umgebungstemperaturdatensignalen erzeugt, wobei jedes der Vielzahl von Umgebungstemperaturdatensignalen zu verschiedenen Zeitpunkten während des Betriebs der thermoakustischen Vorrichtung aufgenommen wird, so dass der Betrieb des elektromechanischen Treibers dadurch eine ausgewählte optimierte Betriebseffizienz für die thermoakustische Vorrichtung bereitstellt.

3. Thermoakustische Vorrichtung nach Anspruch 2, weiterhin umfassend einen Körpertemperatursensor (89, 91, 93) zum Messen der Temperatur in dem Körper in der Nähe des ersten oder des zweiten Wärmetauschers und zum Bereitstellen eines Körpertemperaturdatensignals, wobei die Steuereinheit (98) das Steuersignal wenigstens teilweise aus einer Vielzahl von Umgebungstemperatur-Datensignalen und Körpertemperatur-Datensignalen erzeugt, wobei jedes der Vielzahl von Umgebungstemperatur- und Körpertemperatur-Datensignalen zu verschiedenen Zeitpunkten während des Betriebs der thermoakustischen Vorrichtung derart aufgenommen wird, dass der Betrieb des elektromechanischen Treibers dadurch eine ausgewählte optimierte Betriebseffizienz für die thermoakustische Vorrichtung bereitstellt.

4. Thermoakustische Vorrichtung nach Anspruch 3, weiterhin umfassend:
einen ersten Wärmetauscher-Temperatursensor (88) zum Messen der Temperatur eines in dem ersten Wärmetauscher (76) angeordneten Fluids während des Betriebs der thermoakustischen Vorrichtung und zum Bereitstellen eines ersten Wärmetauscher-Temperaturdatensignals; und
einen zweiten Wärmetauscher-Temperatursensor (90) zum Messen der Temperatur eines in dem zweiten Wärmetauscher (78) angeordneten Fluids während des Betriebs der thermoakustischen Vorrichtung und zum Bereitstellen eines zweiten Wärmetauscher-Temperaturdatensignals;
wobei die Steuereinheit (98) weiterhin kommunikativ mit dem ersten Wärmetauscher-Temperatursensor (88) und dem zweiten Wärmetauscher-Temperatursensor (90) verbunden ist, und das Steuersignal weiterhin basierend auf den ersten und zweiten Wärmetauscher-Temperaturdatensignalen bestimmt wird.

5. Thermoakustische Vorrichtung nach Anspruch 4, bei der die Steuereinheit (98) dazu eingerichtet ist, Benutzerdaten zu empfangen, und das Steuersignal weiterhin basierend auf den Benutzerdaten bestimmt wird.

6. Thermoakustische Vorrichtung nach Anspruch 5, bei der die Steuereinheit (98) einen Speicher umfasst, der vorzugsweise umprogrammierbar ist und eine Nachschlagetabelle enthält, in der Körpertemperaturen, Umgebungstemperaturen und Benutzerdaten an die Frequenz und den Antriebsstrom angepasst sind, wobei zu einem Zeitpunkt während des Betriebs der thermoakustischen Vorrichtung das Steuersignal Frequenz- und Antriebsstromwerte aus der Tabelle auf der Grundlage der entsprechenden Körpertemperatur, Umgebungstemperatur und Benutzerdaten zu diesem Zeitpunkt umfasst.

7. Thermoakustische Vorrichtung nach einem der Ansprüche 3 bis 6, weiterhin umfassend eines oder mehrere von:
(i) einem Hygrometer (96) zur Messung der relativen Feuchtigkeit in dem Umgebungsbereich des Körpers während des Betriebs der thermoakustischen Vorrichtung und zum Bereitstellen eines Feuchtigkeitsdatensignals; wobei die Steuereinheit (98) weiterhin kommunikativ mit dem Hygrometer verbunden ist und das Steuersignal weiterhin basierend auf dem Feuchtigkeitsdatensignal bestimmt wird;
(ii) einen Drucksensor zum Messen des relativen Drucks in einem Bereich innerhalb des Körpers während des Betriebs der thermoakustischen Vorrichtung und zum Bereitstellen eines Druckdatensignals; wobei die Steuereinheit weiterhin kommunikativ mit dem Drucksensor verbunden ist und das Steuersignal weiterhin basierend auf dem Druckdatensignal bestimmt wird, und
(iii) einen Gasströmungssensor zum Messen der Gasströmung in einem Bereich innerhalb des Körpers während des Betriebs der thermoakustischen Vorrichtung und zum Bereitstellen eines Gasströmungsdatensignals; wobei die Steuereinheit weiterhin kommunikativ mit dem Gastströmungssensor verbunden ist und das Steuersignal weiterhin basierend auf dem Gasströmungsdatensignal bestimmt wird.

8. Thermoakustische Vorrichtung nach einem der vorhergehenden Ansprüche, weiterhin umfassend:
einen akustischen Energiewandler, der innerhalb des Körpers (72) gegenüber dem elektromechanischen Treiber relativ zu dem Regenerator (74) angeordnet ist, so dass wenigstens ein Teil der akustischen Energie innerhalb des Körpers zu dem Wandler geleitet und dadurch in elektrische Energie umgewandelt wird;
wobei der Wandler kommunikativ mit der Steuereinheit gekoppelt ist und das Steuersignal weiterhin basierend auf Daten von dem akustischen Energiewandler in einer Rückkopplungsschleife bestimmt wird.

9. Verfahren zum Betreiben einer thermoakustischen Vorrichtung eines Typs, der einen Körper (72) mit einem elektromechanischen Treiber (82) und einem Regenerator (74) enthält, umfassend:
Bestimmen von Temperaturdaten während des Betriebs der thermoakustischen Vorrichtung und Liefern der Temperaturdaten an eine Steuereinheit (98);
Erzeugen eines Steuersignals an der Steuereinheit (98) basierend auf wenigstens den Temperaturdaten und Liefern des Steuersignals an einen Treiber mit variabler Frequenz (84); und
Betreiben des Treibers mit variabler Frequenz (84), um die Frequenz und Amplitude des elektromechanischen Treibers basierend auf dem Steuersignal so zu steuern, dass der Betrieb des elektromechanischen Treibers dadurch eine ausgewählte optimierte Betriebseffizienz für die thermoakustische Vorrichtung liefert;
**dadurch gekennzeichnet, dass** der Schritt des Bestimmens von Temperaturdaten das Messen der Temperatur außerhalb der thermoakustischen Vorrichtung in einem Raum umfasst, in den Wärme von der thermoakustischen Vorrichtung abgeleitet wird, um ein der Temperatur entsprechendes Umgebungstemperaturdatensignal bereitzustellen.

## Revendications

1. Appareil thermo-acoustique, comprenant :
un corps globalement creux et étanche (72) contenant un gaz de travail ;
un régénérateur (74) disposé à l'intérieur dudit corps (72);
un premier échangeur de chaleur (76) disposé à l'intérieur dudit corps (72) et à proximité dudit régénérateur (74) à une première extrémité longitudinale de celui-ci ;
un deuxième échangeur de chaleur (78) disposé à l'intérieur dudit corps (72) et à proximité dudit régénérateur (74) à une deuxième extrémité longitudinale de celui-ci ;
un unité d'attaque électromécanique (82) disposée à l'intérieur dudit corps (72) à proximité dudit premier échangeur de chaleur (76) de sorte qu'une énergie acoustique provenant de ladite unité d'attaque électromécanique soit dirigée dans ledit corps ;
un capteur de température (94) pour mesurer une température locale dudit appareil thermo-acoustique et fournir un signal de données de température ;
une unité de commande (98), connectée en communication audit capteur de température pour déterminer et fournir un signal de commande sur la base dudit signal de données de température ; et
une unité d'attaque à fréquence variable (84) couplée en communication à ladite unité d'attaque électromécanique (82) et à ladite unité de commande (98), pour recevoir un signal de commande à partir de ladite unité de commande, et au moins en partie en fonction dudit signal de commande fournissant un signal d'attaque variable à ladite unité d'attaque électromécanique (82) ;
**caractérisé en ce que** ledit capteur de température (94) est disposé à proximité du corps (72) et adapté pour mesurer la température à l'extérieur dudit appareil thermo-acoustique dans un espace où la chaleur est rejetée par l'appareil thermo-acoustique, et pour fournir un signal de données de température ambiante correspondant à ladite température.

2. Appareil thermo-acoustique selon la revendication 1, dans lequel :
ladite unité de commande (98) génère ledit signal de commande au moins en partie à partir d'une pluralité desdits signaux de données de température ambiante, où chacun de ladite pluralité de signaux de données de température ambiante est pris à différents moments pendant le fonctionnement de l'appareil thermo-acoustique, de sorte que le fonctionnement de ladite unité d'attaque électromécanique fournisse ainsi une efficacité optimisée sélectionnée du fonctionnement pour ledit appareil thermo-acoustique.

3. Appareil thermo-acoustique selon la revendication 2, comprenant en outre un capteur de température de corps (89, 91, 93) pour mesurer la température à l'intérieur dudit corps à proximité d'au moins l'un desdits premier ou deuxième échangeurs de chaleur et fournir un signal de données de température de corps, et dans lequel ladite unité de commande (98) génère ledit signal de commande au moins en partie à partir d'une pluralité desdits signaux de données de température ambiante et desdits signaux de données de température de corps, où chacun de ladite pluralité de signaux de données de température ambiante et de température de corps est pris à différents moments pendant le fonctionnement de l'appareil thermo-acoustique, de sorte que le fonctionnement de ladite unité d'attaque électromécanique fournisse ainsi une efficacité optimisée sélectionnée du fonctionnement pour ledit appareil thermo-acoustique.

4. Appareil thermo-acoustique selon la revendication 3, comprenant en outre :
un premier capteur de température d'échangeur de chaleur (88) pour mesurer la température d'un fluide disposé dans ledit premier échangeur de chaleur (76) pendant le fonctionnement dudit appareil thermo-acoustique et fournir un premier signal de données de température d'échangeur de chaleur ; et
un deuxième capteur de température d'échangeur de chaleur (90) pour mesurer la température d'un fluide disposé dans ledit deuxième échangeur de chaleur (78) pendant le fonctionnement dudit appareil thermo-acoustique et fournir un deuxième signal de données de température d'échangeur de chaleur ;
ladite unité de commande (98) connectée en outre en communication audit premier capteur de température d'échangeur de chaleur (88) et audit deuxième capteur de température d'échangeur de chaleur (90), et dans lequel ledit signal de commande est en outre déterminé sur la base desdits premier et deuxième signaux de données de température d'échangeur de chaleur.

5. Appareil thermo-acoustique selon la revendication 4, dans lequel ladite unité de commande (98) est configurée pour recevoir des données d'utilisateur, et dans lequel ledit signal de commande est en outre déterminé sur la base desdites données d'utilisateur.

6. Appareil thermo-acoustique selon la revendication 5, dans lequel ladite unité de commande (98) comprend une mémoire, de préférence reprogrammable, contenant une table de consultation dans laquelle des températures de corps, des températures ambiantes, et des données d'utilisateur sont mises en correspondance avec la fréquence et le courant d'attaque, et dans lequel, à un moment donné pendant le fonctionnement dudit appareil thermo-acoustique, ledit signal de commande comporte des valeurs de fréquence et de courant d'attaque provenant de ladite table sur la base d'une température de corps correspondante, de la température ambiante, et des données d'utilisateur à ce moment donné.

7. Appareil thermo-acoustique de l'une quelconque des revendications 3 à 6, comprenant en outre un ou plusieurs des éléments suivants :
(i) un hygromètre (96) pour mesurer l'humidité relative dans la région ambiante dudit corps pendant le fonctionnement dudit appareil thermo-acoustique et pour fournir un signal de données d'humidité ; ladite unité de commande (98) est en outre connectée en communication audit hygromètre, et dans lequel ledit signal de commande est en outre déterminé sur la base dudit signal de données d'humidité ;
(ii) un capteur de pression pour mesurer la pression relative dans une région à l'intérieur dudit corps pendant le fonctionnement dudit appareil thermo-acoustique et pour fournir un signal de données de pression ; ladite unité de commande est en outre connectée en communication audit capteur de pression, et dans lequel ledit signal de commande est en outre déterminé sur la base dudit signal de données de pression, et
(iii) un capteur d'écoulement de gaz pour mesurer l'écoulement de gaz dans une région à l'intérieur dudit corps pendant le fonctionnement dudit appareil thermo-acoustique et pour fournir un signal de données d'écoulement de gaz ; ladite unité de commande est en outre connectée en communication audit capteur d'écoulement de gaz, et dans lequel ledit signal de commande est en outre déterminé sur la base dudit signal de données d'écoulement de gaz.

8. Appareil thermo-acoustique de l'une quelconque des revendications précédentes, comprenant en outre :
un convertisseur d'énergie acoustique disposé à l'intérieur dudit corps (72) opposé à ladite unité d'attaque électromécanique par rapport audit régénérateur (74) de sorte qu'au moins une portion de l'énergie acoustique à l'intérieur dudit corps soit dirigée vers ledit convertisseur et ainsi convertie en énergie électrique ;
ledit convertisseur est couplé en communication à ladite unité de commande, et dans lequel ledit signal de commande est en outre déterminé sur la base des données provenant dudit convertisseur d'énergie acoustique dans une boucle de rétroaction.

9. Procédé de fonctionnement d'un appareil thermo-acoustique d'un type qui comporte un corps (72) contenant une unité d'attaque électromécanique (82) et un régénérateur (74), comprenant les étapes consistant à :
déterminer des données de température pendant le fonctionnement dudit appareil thermo-acoustique, et fournir lesdites données de température à une unité de commande (98) ;
générer, à ladite unité de commande (98), un signal de commande sur la base d'au moins lesdites données de température, et fournir ledit signal de commande à une unité d'attaque à fréquence variable (84) ; et
faire fonctionner ladite unité d'attaque à fréquence variable (84) de sorte à commander la fréquence et l'amplitude de ladite unité d'attaque électromécanique sur la base dudit signal de commande de sorte que le fonctionnement de ladite unité d'attaque électromécanique fournisse ainsi une efficacité optimisée sélectionnée du fonctionnement pour ledit appareil thermo-acoustique ;
**caractérisé en ce que** ladite étape consistant à déterminer des données de température comprend la mesure de la température à l'extérieur dudit appareil thermo-acoustique dans un espace où la chaleur est rejetée par l'appareil thermo-acoustique de sorte à fournir un signal de données de température ambiante correspondant à ladite température.
